# EUROPEAN PATENT APPLICATION

(11) **EP 4 711 243 A1**
(43) Date of publication of application: **18.03.2026**
(21) Application number: 24200433.1
(22) Date of filing: 14.09.2024
(51) Int. Cl.: B62D 5/06

(54) **MODULE OF A MODULAR STEERING GEAR UNIT, MODULAR STEERING UNIT AND STEERING SYSTEM**

(71) Applicant: KB Intellectual Property GmbH & Co. KG, 82049 Pullach (DE)
(72) Inventor: GYURKÓ, Zoltán, 1047 Budapest (HU); NEMETH, Huba, 1116 Budapest (HU); STRAUB, Kornel, 2013 Pomáz (HU); TOTH, Zoltan, 1046 Budapest (HU); ENZSÖL, Ákos, 1117 Budapest (HU); TOTH, Janos, 6000 Kecskemét (HU); SINKA, Örs, 6000 Kecskemét (HU); NASZEK, Attila, 1112 Budapest (HU); FERENCZ, Jozsef Zsolt, 1135 Budapest (HU); HOLLOSI, Mate, 1097 Budapest (HU); DEAK, Gergely, 1043 Budapest (HU); MOLNAR, Peter, 1046 Budapest (HU)

(57) **Abstract**

The present invention refers to a module of a modular steering unit for a commercial vehicle, comprising at least one functional unit of the modular steering unit, at least one mechanical interface for fixing the module and one or more interfaces for connecting to at least one further module, wherein the at least one functional unit may be one of the following types: hydraulic actuator, hydraulic pump, electric motor, inverter, hydraulic reservoir and electronic control unit. Further, the present invention refers to a steering unit and a steering system.

## Description

The present invention refers to a modular steering gear unit and its modules as well as to a steering system.

According to usual techniques, steering gears, in particular for steer-by-wire systems, are designed with regard to the demands of the customer requesting different loading capabilities and different installation environments.

US 2023 0242176 A1 discloses a modular electric power steering system. The system includes a tubular neck which guides a universal joint. The tubular neck has a certain bend angle. The system further includes a drive assembly that has an electric motor which is controlled by a control unit. The system additionally includes a gearbox assembly having a torque sensor and a gearbox. The system also includes a steering rod that has a shortenable tube. Further, the system includes a gearbox housing that houses the gearbox assembly. In addition, the system includes two tubular toothed rack housing halves that are shortenable. The gearbox housing is disposed between the two toothed rack housing halves. The system also includes two feet which are disposed at the respective outer end of the two toothed rack housing halves. The feet serve to fasten the power steering system to the vehicle. And the feet include a bushing for guiding the toothed rack.

US11345396 B2 discloses a modular power steering apparatus including a rotatable shaft, which is selectively rotatable to effect turning movement of at least one vehicle wheel. A housing supports the rotatable shaft for rotation relative thereto, about a shaft axis. A first rotational input assembly is provided for transmitting a steering command from a steering member to the rotatable shaft. A second rotational input assembly is operatively connected with the rotatable shaft. The second rotational input assembly is configured to apply a rotational force to the rotatable shaft. The apparatus includes a plurality of drive stations. Each drive station is configured to selectively accept both of the first and second rotational input assemblies for operating connection to the rotatable shaft at different times.

KR20210059814 discloses a module type steering device for a vehicle, which separately comprises a steering housing and a reducer housing to enable the steering housing and the reducer housing to be assembled to be separated and control a mounting angle to a left side or a right side of a rack bar housing, thereby commonly applying the device to LHD and RHD vehicles and avoiding interference with peripheral components.

EP 0922627 discloses a modular concept of a steering angle sensor, which preferably works optically. The sensor head can be selectively connected with the housing to provide a located entity, which also can be easily exchanged. The coded disc gives a variable signal, and the sensor head partly enters the opening of the housing, and essentially closes the opening. The sensor head is insertable in the housing in a radial direction to the code plate.

DE 10 2019 215 547 B3 discloses steering control unit of modular design, having a control unit housing which has at least one module receiving area accessible from the outside, having at least one module interface permanently integrated in the control unit housing and having at least one replaceable hardware module which can be arranged in the module receiving area, comprises at least part of a main computing logic and is detachably coupled to the module interface in an assembled state.

It is an object of the invention to provide a modular steering unit for a steering gear, which can be easily and efficiently adapted to different demands and requirements, in particular adapted to different loading capabilities and installation environments/spaces.

These objectives are resolved by a module of a modular steering unit according to independent claim 1, concerning a modular steering unit by claim 14, and concerning a steering system by claim 15. Preferred embodiments are addressed by the dependent claims respectively.

According to the present invention a module of a modular steering unit for a commercial vehicle is provided comprising at least one functional unit of the modular steering unit, at least one mechanical interface for fixing the module and one or more interfaces for connecting to at least one further module, wherein the functional unit may be at least one of the following types: hydraulic actuator, hydraulic pump, electric motor, inverter, hydraulic reservoir and/or electronic control unit.

The present invention is based on the idea to provide main building blocks for a steering unit having well (pre-)defined interfaces, which allow to change individual ones of the building blocks according to the customer demands without large re-designing efforts.

In particular, by a module or multiple modules according to the present invention a flexible and variable environment for building up or adapting steering systems is provided, whereby modules of the same type can be replaced against each other.

According to one preferred embodiment the module comprising at least one of the types of functional units has predetermined set of interfaces such that modules of the same type are interchangeable and/or wherein the module comprises multiple functional units of different types.

Preferably, modules of a certain type, having the same configuration of interfaces, can be replaced against each other in case of a defect.

Moreover, in the context of the present invention it may also be possible to combine different functional units within one module comprising an accordingly configured set of interfaces.

Alternatively or additionally, modules of the same type can comprise different sets and configurations of interfaces such that various versions of a steering system can be provided by exchanging modules of the same type against each other.

According to one preferred embodiment a module of type hydraulic actuator has at least the mechanical interface for fixing, a hydraulic interface for connecting a module of type hydraulic block or of type hydraulic pump and a sensor connection interface.

In particular the module of type hydraulic actuator can comprise one of a linear or rotary type hydraulic actuator, a single or dual side operational hydraulic actuator, a normal force or enlarged force actuator and a left-hand side built hydraulic actuator or right-hand side built hydraulic actuator.

Thus, the module of type hydraulic actuator has some required interfaces and may have some additional optional interfaces.

In addition, the hydraulic actuator preferably has an output for actually steering at least one corresponding road wheel.

According to one preferred embodiment a module of type hydraulic pump has at least the mechanical interface for fixing, a hydraulic interface for connecting a module of type hydraulic block or of type hydraulic actuator, one or more sensor connection interface(s) and a mechanic interface for transmission of a mechanical movement, in particular a torque transmission, for connecting a module of type electric motor.

Preferably, the module of type hydraulic pump can comprise a hydraulic pump with normal or enlarged fluid flow and normal or enlarged hydraulic pressure.

According to one preferred embodiment a module of type electric motor has at least the mechanical interface for fixing, one or more sensor connection interface(s) and a mechanical interface for transmission of a mechanical movement, in particular torque transmission, to the mechanical interface of a module of type hydraulic pump and/or for connecting a module of type electric motor and an electrical interface for connection to a module of type inverter.

In particular, the module of type electric motor can comprise an electric motor with normal or enlarged power, different windings and/or different outer shape.

According to one preferred embodiment a module of type inverter has at least the mechanical interface for fixing, one or more sensor connection interface(s) and an electric interface for connecting a module of type electric motor and a different electric interface for connecting to an electric control unit and/or to a module of type electric control unit.

The module of type inverter can preferably comprise an inverter with normal or enlarged output power and inverter variants designed for different power supply values

According to one preferred embodiment a module of type hydraulic block has at least the mechanical interface for fixing, a hydraulic interface for connecting a module of type hydraulic pump or of type hydraulic actuator, the module of type hydraulic block preferably comprising additionally a further hydraulic interface for connecting hydraulic reservoirs.

Thus, if present, the module of type hydraulic block may be interposed between the module of type hydraulic pump and the module of type hydraulic actuator and may be used as a connection module to a hydraulic reservoir.

One or more of the modules may be provided with input-output interfaces, for sensor connection lines for sensors, which are located in a different module and/or, alternatively or additionally, the modules may have a feed-through possibility for such sensor connections lines or other lines.

According to another aspect of the invention a modular steering unit for a commercial vehicle comprising multiple different modules, preferably three different modules, according to the present invention as set out above or consisting of at least multiple different modules, preferably three different modules, according to the present invention as mentioned above, wherein each of the different modules comprises at least one functional unit such that the modular steering unit is provided with functional units of type electric motor, of type hydraulic pump and of type hydraulic actuator, wherein the multiple different modules are directly or indirectly fixed with each other via the mechanical interface, in particular their respective mechanical interface.

Preferably, at least two of the at least three different modules can be fixed to or arranged with each other in order to form a building block.

According to another aspect of the invention a steering system with the above modular steering unit is provided.

In particular, the steering system can further be considered to comprise a steering wheel and one or more road wheels.

In the context of the present invention, the steering system may be implemented as a steer-by-wire system.

Moreover, in the context of the present invention, a set of modules according to the present invention can be provided, whereby the set can comprise a plurality of modules of different types with multiple modules of the same type respectively, and whereby the multiple modules of the same type are preferably interchangeable against and/or replaceable by each other.

In particular, the multiple modules of the same type can comprise identical or different sets of interfaces such that defective modules can be replaced and/or modules with different functionalities can be implemented in order to provide a different functionality to a corresponding modular steering unit or steering system.

All of the advantages and technical effects being described in the context of the module can also be applied, individually or commonly, for the steering unit according to the present invention and to the steering system according to the present invention.

Further details and advantages of the present invention are explained and described in more detail in the context of the embodiment as illustrated by the enclosed figures.

It is schematically shown:
- Fig. 1: a first embodiment of a steering unit; and
- Fig. 2a-c: different further embodiments of the steering unit.

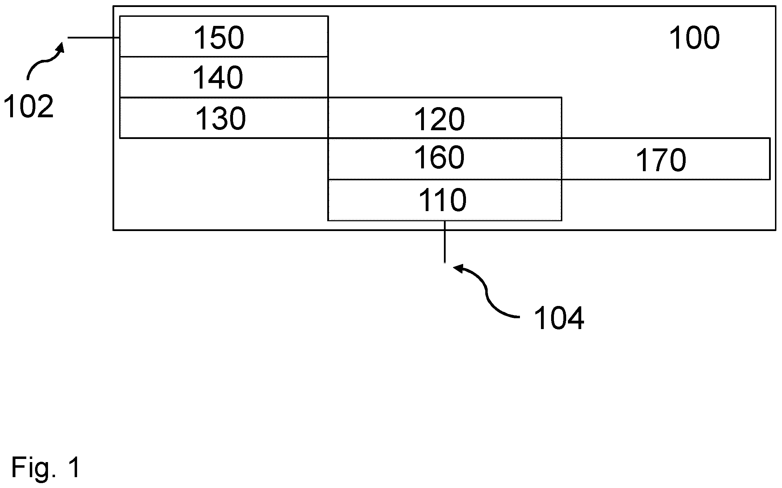

In Fig. 1 a steering unit 100 is depicted. The steering unit 100 has an input 102 and an output 104.

The steering unit 100 comprises several modules, each module comprising a functional unit of the modular steering unit, at least one mechanical interface for fixing the module as well as one or more interfaces for connecting to a further module.

In the shown embodiment, there is a module of type hydraulic actuator 110, a module of type hydraulic pump 120, a module of type electric motor 130, and a module of type inverter 140.

Each of those modules has a mechanical interface to be fixed with a corresponding adjacent module, being a different type.

Thus, the module of type hydraulic actuator 110 is on one side connected to the output 104 and on the other side connected the module of type hydraulic pump 120.

In the depicted case according to Fig. 1, a separate module of type hydraulic block 160, which itself is connected to a hydraulic reservoir 170, is interposed in the connection between the modules of type hydraulic actuator 110 and hydraulic pump 120.

Further, the module of type hydraulic pump 120 is connected to the module of type electric motor 130, by another/different mechanical interface for fixing those modules together.

On the input-side there is a module of type electronic control unit 150 which is connected to the input 102 to receive, directly or indirectly, (steering) signals/data/commands from another operating system/unit of the vehicle like e.g. a corresponding steering wheel, a brake system, a parking brake system, a lifting system and/or from another electronic control unit of the vehicle.

The electronic control unit 150 of the steering unit is in particular configured to control the inverter and/or electric motor and may receive sensor signals as an input.

According to Fig. 1, the electronic control unit 150 and the module of type electric motor 130 are indirectly connected/fixed via the module of type inverter 140. Namely, the module of type inverter 140 can comprise multiple mechanical interfaces for fixing/arranging of different modules with each other.

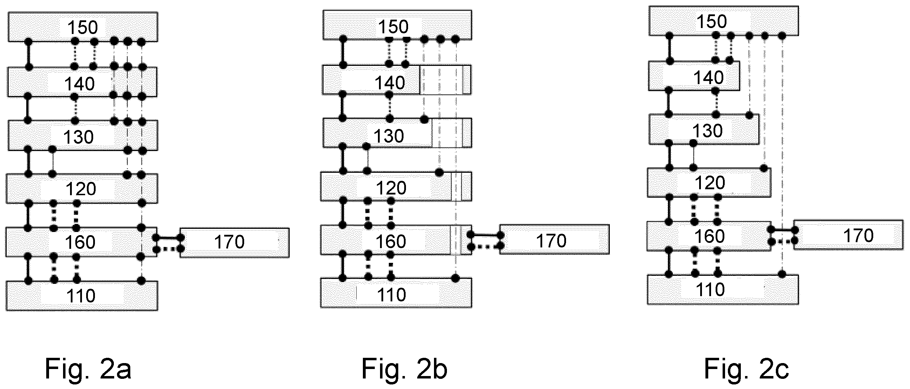

Fig. 2a illustrates a steering unit 100 for a linear hydraulic output steering gear.

An electronic control unit 150 is connected to a module of type inverter 140 via a set of interfaces comprising a mechanical interface for fixing the electronic control unit 150 to the module of type inverter 140 and an electrical interface for signal and power transmission, as well as electrical interfaces for sensor signal transmission for each module following in line.

The module of type inverter 140 is, on its other side, connected via a set of interfaces comprising a mechanical interface for fixing a module of type electric motor 130 as well as an electrical interface for signal and power transmission to the module of type electric motor 130 and electrical interfaces for sensor signal transmission for each module following in line.

The module of type electric motor 130 is connected via a set of interfaces comprising a mechanical interface for fixing a module of type hydraulic pump 120, a further mechanical interface for torque transmission and electrical interfaces for sensor signal transmission for each module following in line.

The module of type hydraulic pump 120 is connected via a set of interfaces comprising a mechanical interface for fixing a module of type hydraulic block 160, which itself is connected to a hydraulic reservoir 170 via an interface for a mechanical fixing connection, and a hydraulic connection.

The module of type hydraulic block 160 is connected via a set of interfaces comprising a mechanical interface for fixing a module of type hydraulic actuator 110, a hydraulic connection interface as well as an electrical interface for sensor signal transmission for the module of type hydraulic actuator 110.

Each of the modules can have standardized interfaces in order to be able to exchange one of the modules, e.g. the module of type electric motor 130 for a different one with higher power without changing the design of the steering module itself. In such a way, the design allows for a cost-efficient adaptation to the demands of the customer.

Fig. 2b shows an embodiment which has the same modules as well as mechanical and hydraulic connections, as the embodiment shown in Fig. 2a.

However, the electrical interfaces for sensor signal transmission are not provided with an input and output at each of the modules but the modules are designed such, that a connection line for the sensors can be feed-through.

Fig. 2c shows an embodiment which has the same modules as well as mechanical and hydraulic connections as the embodiments shown in Fig. 2a and 2b.

However, the electronic control unit 150 is provided with electrical interfaces for sensor signals for each of the other modules, preferably except the module of type hydraulic block 160. However, the other modules are only provided with a single electrical interface for sensor signals.

Connection lines for sensors, which are not next in line are fed around the other modules.

In summary, by the present invention a modular steering unit for a commercial vehicle and modules for this steering unit are provided allowing to easily adapt a steering system to the customer demands, in particular adapted to different loading capabilities and installation environments/spaces.

### REFERENCE SIGNS

- 100: Steering unit
- 102: Input
- 104: Output
- 110: Module type hydraulic actuator
- 120: Module type hydraulic pump
- 130: Module type electric motor
- 140: Module type inverter
- 150: Electric control unit
- 160: Hydraulic block
- 170: Hydraulic reservoir

## Claims

1. Module of a modular steering unit (100) for a commercial vehicle, comprising at least one functional unit of the modular steering unit (100), at least one mechanical interface for fixing the module and one or more interfaces for connecting to at least one further module, wherein the at least one functional unit may be one of the following types: hydraulic actuator (110), hydraulic pump (120), electric motor (130), inverter (140), hydraulic reservoir (170) and/or electronic control unit (150).

2. Module according to claim 1,
**characterized in that**
the module comprising at least one of the types of functional units has a predetermined set of interfaces such that modules of the same type are interchangeable and/or wherein the module comprises multiple functional units of different types.

3. Module according to one of the preceding claims,
**characterized in that**
a module of type hydraulic actuator (110) has at least the mechanical interface for fixing, a hydraulic interface for connecting a module of type hydraulic block (160) or of type hydraulic pump (120) and a sensor connection interface.

4. Module according to claim 3,
**characterized in that**
the module of type hydraulic actuator (110) comprises one of a linear or rotary type hydraulic actuator, a single or dual side operational hydraulic actuator, a normal force or enlarged force actuator and a left-hand side built hydraulic actuator or right-hand side built hydraulic actuator.

5. Module according to one of the preceding claims,
**characterized in that**
a module of type hydraulic pump (120) has at least the mechanical interface for fixing, a hydraulic interface for connecting a module of type hydraulic block (160) or of type hydraulic actuator (110), one or more sensor connection interface(s) and a mechanic interface for transmission of a mechanical movement, in particular a torque transmission, for connecting a module of type electric motor (130).

6. Module according to claim 5,
**characterized in that**
the module of type hydraulic pump (120) comprises a hydraulic pump with normal or enlarged fluid flow and normal or enlarged hydraulic pressure.

7. Module according to one of the preceding claims,
**characterized in that**
a module of type electric motor (130) has at least the mechanical interface for fixing, one or more sensor connection interface(s) and a mechanical interface for transmission of a mechanical movement, in particular torque transmission, to the mechanical interface of a module of type hydraulic pump (120) and/or for connecting a module of type electric motor (130) and an electrical interface for connection to a module of type inverter (140).

8. Module according to claim 7,
**characterized in that**
the module of type electric motor (130) comprises an electric motor with normal or enlarged power, different windings and/or different outer shape.

9. Module according to one of the preceding claims,
**characterized in that**
a module of type inverter (140) has at least the mechanical interface for fixing, one or more sensor connection interface(s) and an electric interface for connecting a module of type electric motor (130) and a different electric interface for connecting to an electric control unit (150) and/or to a module of type electric control unit (150).

10. Module according to claim 9,
**characterized in that**
the module of type inverter (140) comprising an inverter with normal or enlarged output power and inverter variants designed for different power supply values.

11. Module according to one of the preceding claims,
**characterized in that**
a module of type hydraulic block (160) has at least the mechanical interface for fixing, a hydraulic interface for connecting a module of type hydraulic pump (120) or of type hydraulic actuator (110), the module of type hydraulic block preferably comprising a further hydraulic interface for connecting hydraulic reservoirs (170).

12. Module according to one of the preceding claims,
**characterized in that**
the module is provided with input-output interfaces, for sensor connection lines for sensors, which are located in a different module.

13. Module according to one of the preceding claims,
**characterized in that**
the module has a feed-through possibility for sensor connection lines for sensors, which are located in a different module.

14. Modular steering unit (100) for a commercial vehicle comprising multiple different modules according to one of the preceding claims, wherein each of the different modules comprises at least one functional unit such that the modular steering unit is provided with functional units of type electric motor (130), of type hydraulic pump (120) and of type hydraulic actuator (110), wherein the multiple different modules are directly or indirectly fixed with each other via the mechanical interface.

15. Steering system comprising a modular steering unit (100) according to claim 14.
